# EUROPEAN PATENT SPECIFICATION

(11) **EP 3 455 996 B1**
(45) Date of publication and mention of the grant of the patent: **17.09.2025**
(21) Application number: 16901562.5
(22) Date of filing: 09.05.2016
(51) Int. Cl.: H04L 9/08, G06F 21/62, G06Q 20/22, G06Q 20/38, G06Q 20/40

(54) **BLOCK CHAIN BASED RESOURCE MANAGEMENT**
BLOCKKETTENBASIERTE RESSOURCENVERWALTUNG
GESTION DE RESSOURCES À BASE DE CHAÎNES DE BLOCS

(43) Date of publication of application: 20.03.2019
(73) Proprietor: Nokia Technologies Oy, 02610 Espoo (FI)
(72) Inventor: ROENNOW, Troels F., Cambridge CB2 9BG (GB); WABNIG, Joachim, Upper Cambourne CB23 6AX (GB); MARTIN LOPEZ, Enrique, Cambridge CB4 3DN (GB); BAYKANER, Khan R., Upper Cambourne Cambridgeshire CB23 6BL (GB)
(74) Representative: Nokia EPO representatives
(86) International application number: PCT/FI2016/050301
(87) International publication number: WO 2017/194815

(56) References cited:
- WO-A1-2015/175722
- CN-A- 105 427 104
- US-A1- 2015 120 567
- US-A1- 2015 310 424
- US-A1- 2015 379 510
- US-A1- 2016 098 723
- US-B1- 9 298 806
- XU, XIWE I ET AL.: "The Blockchain as a Software Connector", THE 13TH WORKING IEEE /IFIP CONFERENCE ON SOFTWARE ARCHITECTURE (WICSA, 5 April 2016 (2016-04-05), XP055275506, Retrieved from the Internet <URL:http://ieeexplore.ieee.org/xpls/abs_all.jsp?arnumber=7516828> [retrieved on 20160817]

## Description

### FIELD

The present invention relates to block chain based management of resources, and/or to dependable information management.

### BACKGROUND

Transactions in digital systems may take several different forms. For example, credit card transactions may be verified by querying, from an issuer of the card, whether a credit account associated with the credit card has sufficient remaining credit to cover the transaction. Additionally, a client identity may be verified, which may take place by requesting the client to enter a pin code or to provide a signature. In some cases, the client may be requested to present a proof-of-identity document, such as a passport. Yet further, a bank issuing the credit card may call the client's mobile phone before approving the transaction, in case the transaction meets certain criteria.

Where the digital system is not centrally managed, adding a transaction into a block of the block chain may take place by requiring a proof-of-work. For example, before adding a block to the block chain, containing a certain transaction, a computer system may issue a challenge. The challenge may comprise a mathematical challenge, such as a partial hash function reversal, which a node in the network can perform, and the performance of which requires an investment in processor cycles, for example. The challenge may be computationally simple for the verifier to generate and to verify an answer the client provides is correct, but computationally more challenging for the client to obtain the answer.

A further verification method is a block chain, wherein a resource is recorded in a ledger, which may be public. Changes in resource ownership take the form of transactions, wherein a transaction may comprise an identifier of a new owner, that is the recipient, of the resource, optionally together with a cryptographic signature of the previous owner, that is the sender, such that malicious attackers cannot re-assign resources they do not own. A cryptographic signature may be generated using a private key of a private key-public key pair. Validity of the cryptographic signature may be verified using the public key, while the signature can only be generated using the private key. While the public key may be freely shared with no reduction in security, the private key is closely kept by the owner.

In a block chain, transactions are recorded in blocks comprised in the chain, wherein the chain may comprise a massively replicated database. In principle, a chain of previous owners, or at least their identifiers, of each resource can be assessed based on the block chain. In some cases, massively replicated may mean that each node in the network has a copy of the transactions. US 2015/120567 A1 describes a blockchain-based system for controlling access to restricted digital resources, particularly media files or data files.

### SUMMARY OF THE INVENTION

The invention is defined by the features of the independent claims. Some specific embodiments are defined in the dependent claims.

According to a first aspect of the present invention, there is provided an apparatus comprising means for performing storing an identifier of a digital resource, causing transmission, to a distributed block chain transaction ledger, of a request for authorization concerning the digital resource, causing transmission of a request to receive the digital resource in the apparatus, the request comprising the identifier, and verifying, using an indication included in a first distributed block chain ledger distinct from the distributed block chain transaction ledger, that a user of the apparatus is authorized to access the digital resource, the first distributed block chain ledger comprising grants of access rights, the verifying comprising querying the first distributed block chain ledger, the digital resource being a configuration data file for the apparatus, wherein the means are further configured to, responsive to the user being verified as being authorized to access the digital resource, provide the configuration data file to the user.

Various embodiments of the first aspect may comprise at least one feature from the following bulleted list:
- the means are further configured to verify, using a distributed block chain certification ledger, that the apparatus is of a correct type to provide the digital resource to the user, the distributed block chain certification ledger being distinct from the first distributed block chain ledger and the distributed block chain transaction ledger
- the means are further configured to verify the user is authorized to access the digital resource by transmitting a request to a node.

According to a second aspect of the present invention, there is provided an apparatus comprising means for performing storing a plurality of identifiers of digital resources, determining a request for authorization transaction from a first user comprised in a new block of a distributed block chain transaction ledger, and to responsively cause an indication to be included in a second distributed block chain ledger, the indication indicating the first user is authorized to access a configuration data file for a device of the first user, the second distributed block chain ledger comprising grants of access rights.

Various embodiments of the second aspect may comprise at least one feature from the following bulleted list:
- the memory stores a local copy of the distributed block chain transaction ledger and the second distributed block chain ledger
- Merkle hashes of the distributed block chain transaction ledger and the second distributed block chain ledger are combined into a single hash when adding new blocks
- the apparatus is further configured to render at least one of the distributed block chain transaction ledger and the second distributed block chain ledger unusable responsive to a determination the apparatus is being tampered with
- rendering unusable comprises permanently deleting at least one encryption key
- the at least one processing core is further configured to associate a validity time with the indication.

According to a third aspect of the present invention, there is provided a method comprising storing an identifier of a digital resource, causing transmission, to a distributed block chain transaction ledger, of a request for authorization concerning the digital resource, causing transmission of a request to receive the digital resource, the request comprising the identifier, and verifying, using an indication included in a first distributed block chain ledger distinct from the distributed block chain transaction ledger, that a user is authorized to access the digital resource, the first distributed block chain ledger comprising grants of access rights, the verifying comprising querying the first distributed block chain ledger, the digital resource being a configuration data file for the apparatus wherein the method further comprises, responsive to the user being verified as being authorized to access the digital resource, providing the configuration data file to the user.

Various embodiments of the third aspect may comprise at least one feature corresponding to a feature from the preceding bulleted list laid out in connection with the first aspect.

According to a fourth aspect of the present invention, there is provided a method comprising storing a plurality of identifiers of digital resources, determining a request for authorization transaction from a first user comprised in a new block of a distributed block chain transaction ledger, and to responsively cause an indication to be included in a second distributed block chain ledger, the indication indicating the first user is authorized to access a configuration data file for a device of the first user, the second distributed block chain ledger comprising grants of access rights.

Various embodiments of the fourth aspect may comprise at least one feature corresponding to a feature from the preceding bulleted list laid out in connection with the second aspect.

According to a fifth aspect of the present invention, there is provided a computer program configured to cause a method in accordance with at least one of the third and fourth aspects to be performed.

### BRIEF DESCRIPTION OF THE DRAWINGS

FIGURE 1 illustrates an example system in accordance with at least some embodiments of the present invention;
FIGURE 2 illustrates a block chain;
FIGURE 3 illustrates an example apparatus capable of supporting at least some embodiments of the present invention;
FIGURE 4 illustrates signalling in accordance with at least some embodiments of the present invention;
FIGURE 5 is a flow graph of a method in accordance with at least some embodiments of the present invention, and
FIGURE 6 is a flow graph of a method in accordance with at least some embodiments of the present invention.

### EMBODIMENTS

Access rights concerning digital resources may be stored in a distributed block chain, which may be publicly available. The block chain enables cross platform access to the digital resources, as the block chain itself is not tied to any specific service provider. Thus a doctor, for example, is enabled to access data concerning his patients regardless of the device he happens to be using at the time. Likewise, a user of a technical device may be enabled to access the correct configuration data for his device.

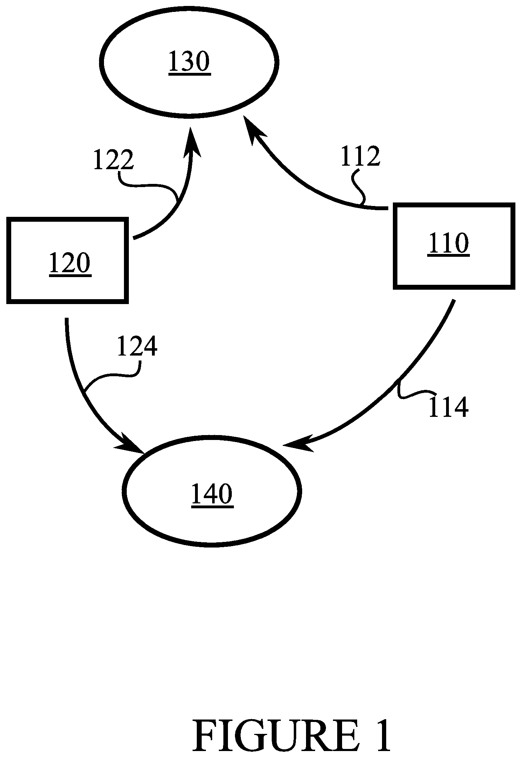

FIGURE 1 illustrates an example system in accordance with at least some embodiments of the present invention. The system of FIGURE 1 comprises user device 110, which may comprise a tablet computer, smartphone, laptop computer, set-top box or other suitable electronic device. The system further comprises device 120, which may comprise a management node, or, in some embodiments, a distributed computing system. Illustrated further in FIGURE 1 are transaction ledger 130 and rights ledger 140. Transaction ledger 130 and rights ledger 140 may each comprise a distributed block chain ledger. By distributed block chain ledger it is meant a block chain ledger that is not centralized, and copies of the block chain are stored in participating nodes. Once a new block is established, it is copied among the participating nodes to maintain the copies of the block chain up to date.

A user of user device 110 may desire access to a digital resource. A digital resource may comprise, in general, a digital data file or an executable program. Examples include patient data records, confidential documents, configuration data files, movies, music files, and cloud storage accounts.

To obtain access to a digital resource the user doesn't yet have access to, a user may cause the access to be requested by issuing an authorization request to transaction ledger 130. Such a request is schematically illustrated in FIGURE 1 as message 112. The request may comprise an identifier of the user and/or of user device 110. The request may comprise information relating to why the access should be granted. For example, where the digital resource comprises patient data, request 112 may comprise a doctor's digital cryptographic signature or code. Where the digital resource comprises a movie, request 112 may comprise payment information, such as cryptocurrency payment information or credit card payment information. Request 112 may comprise a transaction in transaction ledger 130, or it may comprise information needed in establishing a transaction in transaction ledger 130. Request 112 may comprise an identifier of a digital resource, for example, a hash of a file where the digital resource is a file, or a name or code of the resource, or an address or link via which the resource is accessible on a network.

Device 120 may add a new block of transactions to block chain transaction ledger 130, or device 120 may observe that a new block has been added thereto. Device 120 may become aware of the transaction caused by request 112 by transmitting a query 122 to transaction ledger 130, for example. Responsively, device 120 may, in some embodiments, determine, whether the new block comprises transactions that relate to digital resources administered via rights ledger 140. In case such transactions are present in the new block, as is the case in FIGURE 1 since request 112 is comprised in the new block, device 120 may cause a transaction to be provided to a next new block in rights ledger 140. Device 120 may accomplish this by transmitting a transaction 124 to rights ledger 140.

When the next new block of rights ledger 140 is completed, transaction 124 will be reflected therein, and user device 110 may observe that access to the digital resource has been granted. In FIGURE 1, user device 110 queries rights ledger 140 by transmitting a query 114. In case the query elicits a positive response, the access rights to the user to the digital resource have been verified, and user device 110 may provide the digital resource to the user. In case user device 110 stores a copy of rights ledger 140, a separate query 114 is not necessary, as user device 110 will already be in possession of the information query 114 seeks to obtain. Transaction 124 may comprise a validity time relating to the rights, such that renting access to the digital resource may thereby be enabled, for example. A further example of a use of validity time is that access to patient data is restricted to office hours, to reduce a risk of theft of the data in case a user device 110 of a doctor is stolen.

The resource may be downloaded from a suitable server arrangement, for example. The response to query 114 may comprise access or cryptographic information enabling the downloading or accessing the contents of the downloaded resource. For example, the response to query 114 may comprise access information to a cloud storage account, or decryption keys. This access or cryptographic information may originate in transaction 124, for example. The access or cryptographic information may comprise, for example, an encryption key, keying information or a nonce cryptographically signed by an owner of the digital resource, the owner thus granting access rights to the user.

Device 120 may comprise a node in a distributed block chain network relating to transaction ledger 130 and/or rights ledger 140. In some embodiments, transaction ledger 130 and rights ledger 140 are implemented as a joint ledger, by which it may be meant, for example, that new blocks are added to these two ledgers at the same time, and hashes joining the new blocks to earlier blocks are calculated over transactions of both ledgers. Thus, for example, a single proof-of-work may complete a block in the transaction ledger and in the rights ledger at the same time. Blocks of the joint ledger may comprise transactions of both ledgers. Device 120 may be configured to store, at least partly, a copy of the transaction ledger and/or a copy of the rights ledger.

In case transaction ledger 130 and rights ledger 140 are processed together, that is, a single proof-of-work is used to process a new joint block for these ledgers, device 120 may be configured to cause transaction 124 as a response to receipt of request 112, rather than responsive to a completion of a new block in transaction ledger 130. An advantage of this is that transaction 124 is then processed one block earlier in rights ledger 140. In general, therefore whether after the new block is already established or already before it is established, device 120 may react to a new transaction in the new block.

A transaction may comprise a transfer or grant of resources, or rights, to a recipient account. For example, in rights ledger 140 a transaction may comprise a grant of a right to access a digital resource to a user. In the transaction ledger, a transaction may comprise a received request for rights. In general, a transaction may be considered to be information stored in a block in a block chain. A transaction may involve two parties and a resource. A transaction may comprise a data structure or message, which comprises an identifier and/or quantity of the resource to be transferred or right to be granted, an identifier of a recipient or user account and a cryptographic signature of the sender or granter. Depending on the system, a sender or granter account may also be identified in the transaction. Thus, the cryptographic signature, which may be created using a private key of the sender, guards against theft of the resource or right, since only the sender or granter is in possession of the private key.

To establish the next block, the transactions are broadcast into the network. Broadcasting here refers to a dissemination method suitable for the context, which will cause the transactions to be communicated to the nodes of the network in general. Reaching each and every node with each and every transaction is not strictly necessary. A node establishing the next block may be known as a miner node. A miner node may compile a set of transactions, which it receives from the broadcasts, for the next block, and search for a proof-of-work code that covers all the transactions in the set of transactions for the next block. For example, the proof-of-work code may be a numerical value, with which the contents of the next block, that is, the set of transactions, hashes to a value that is less than a threshold. More generally, there may be a target area of an output space of a hash function, wherein the target space need not be in the low end of the target space. The smaller the target area is, the more difficult it is to discover the proof-of-work. Once a miner discovers the proof-of-work, it can publish the block, which other nodes of the system will then add to the block chain as the new most recent established block.

In case the miner node discovers a proof-or-work based on an incomplete set of transactions, for example if some transactions didn't reach the miner node, other nodes in the network will not accept the block into the block chain, and it will be excluded from a consensus version of the block chain in the system.

Since an output of a hash function is a pseudorandom function of the input, the set of transactions, hashed by itself, produces a hash value that is essentially randomly placed in the output space of the hash function. Note, that the set of transactions may be completely or representatively present as input to the hash function. Modifying the input with a candidate proof-of-work code, which may be known as a nonce, will produce a new hash value, which again is essentially randomly placed in the output space of the hash function. The modification may be as slight as a single bit. Therefore, searching for the correct proof-of-work code, which satisfies a pre-agreed criterion concerning its location in the output space of the hash function, requires repeatedly deriving a hash value with a different candidate proof-of-work code modifying the input to the hash function. Once a proof-of-work code that, with the transactions, produces a hash value in the target area of the output space of the hash function is found, the block is ready. A ready block may be distributed to the system to establish it therein in the block chain.

Once a new block is established, the block chain becomes longer. A transaction is considered the more reliable, the larger the number of blocks established since the block where the transaction is comprised. This is so, since transactions are hashed into the chain of blocks, and discrepancies in the block chain are resolved as the block chain gets longer. In each next block in the sequence, a hash of the previous block may be included along with the transactions, attaching the blocks to each other to form the chain. Hashes linking the blocks together to form a chain may be referred to as Merkle hashes. In detail, maliciously modifying a transaction in a block far down the chain would involve redoing the work of finding proofs-of-work for all subsequent blocks, since the input to the hash function for the block comprising the transaction would be changed, causing the resulting hash value, with the proof-of-work in that block, to no longer be disposed in the desired area in the output space of the hash function.

Although discussed above in terms of proof-of-work, in some embodiments a proof-of-stake may be used instead of, or additionally to, a proof-of-work. In a proof-of-stake based system, a new block is accepted once a sufficient fraction of resources are proven as owned by nodes ready to accept the new block version.

In addition to transaction ledger 130 and rights ledger 140, a certification ledger may be present, which may record which devices, or device types, are appropriate for which kinds of digital resources. A certification ledger may contain information describing what kinds of actions are permitted for a device or device type, with respect to a digital resource or digital resource type. For example, certain kinds of user devices may only be allowed to stream certain kinds of content, while other kinds may be allowed to download and store the content. Device 120 may, where it stores at least one of the transaction ledger and rights ledger, be configured to resist tampering. To such effect, device 120 may be arranged to detect tampering, for example opening of its case, and to render the ledger inside unusable. Rendering unusable may comprise, for example, deleting an encryption key needed to access the information, or spilling acid on a hard disk drive. A separate battery may be arranged to power this feature, in case an attacker disconnects device 120 from a power source before the tampering.

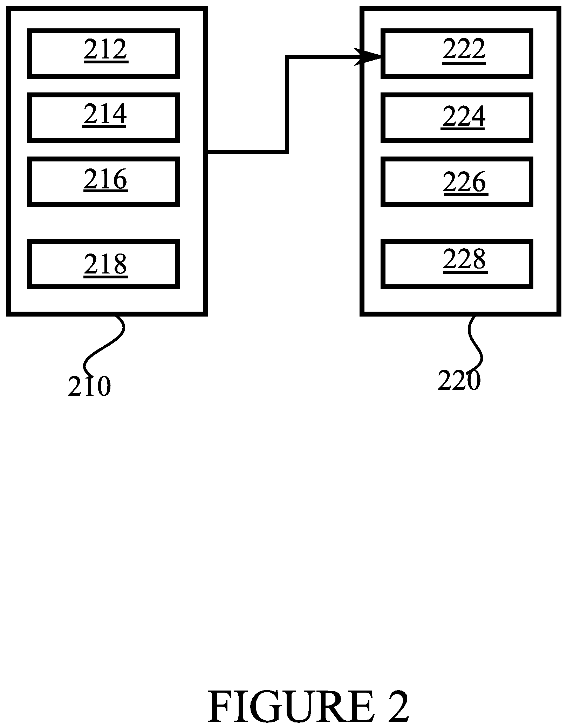

FIGURE 2 illustrates a block chain. While the figure has two blocks, in general a block chain may comprise more than two blocks as well, and in fact frequently does comprise more than two blocks. Block 210 comprises a previous hash 212, a combined hash 214, a block hash 216 and a proof-of-work 218, which could also be another kind of proof, such as proof-of-stake. Similarly, block 220 comprises a previous hash 222, a combined hash 224, a block hash 226 and a proof-of-work 228, or any other suitable proof, such as proof-of-stake.

Block 210 comprises, in addition to the illustrated header fields also a set of transactions that forms the actual data of the block. Previous hash 212 comprises a hash value calculated over a block that precedes block 210 in the sequence of the block chain, unless block 210 is the overall first block. Previous hash 212 may be calculated over all data in this preceding block, or over header fields of the preceding block, for example. Combined hash 214 may comprise the hash of the hash from the previous block 212 together with the hash of the current transaction tree 216. In one embodiment the transaction tree may be a Merkle tree. In another embodiment it may be a single transaction. The field 214 may be implicitly included in the block by which it would be required to be computed every time a block should be verified. Block hash 216 may comprise a hash calculated over the set of transactions in block 210, or over a set of hashes of said transactions, for example. In other words, block hash 216 is representative of transactions comprised in the block. Proof-of-work 218 may comprise a nonce with which the contents of block 210 yield a hash value in the target area of the output space of the hash function.

Block 220 resembles block 210 in structure, differing in the transactions comprised therein, and in the hashes. A hash of block 210 is stored as previous hash 222 in block 220. Combined hash 224 comprises a hash of the previous hash 222 and the current transaction hash 226. Block hash 226 may comprise a hash calculated over the set of transactions in block 220, or over a set of hashes of said transactions. In other words, block hash 226 is representative of transactions comprised in the block. Proof-of-work 228 comprises a nonce with which the contents of block 220 yield a hash value in the target area of the output space of the hash function.

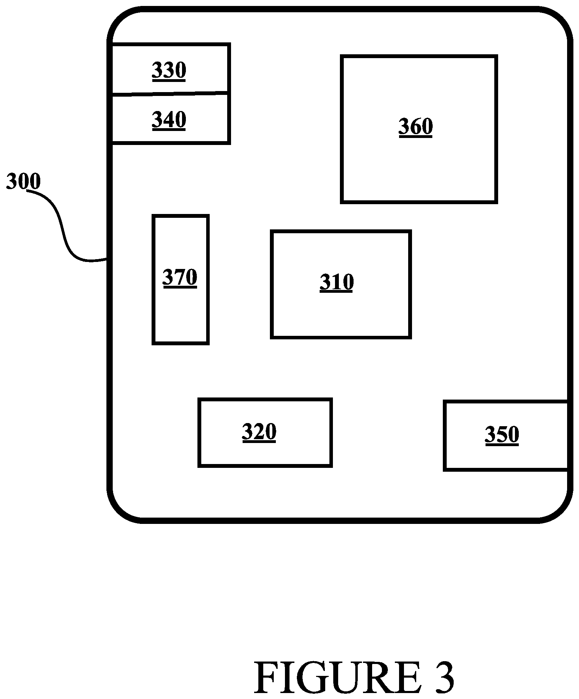

FIGURE 3 illustrates an example apparatus capable of supporting at least some embodiments of the present invention. Illustrated is device 300, which may comprise, for example, a communication device such as user device 110 or device 120 of FIGURE 1. Comprised in device 300 is processor 310, which may comprise, for example, a single- or multi-core processor wherein a single-core processor comprises one processing core and a multi-core processor comprises more than one processing core. Processor 310 may comprise more than one processor. A processing core may comprise, for example, a Cortex-A8 processing core manufactured by ARM Holdings or a Steamroller processing core produced by Advanced Micro Devices Corporation. Processor 310 may comprise at least one Qualcomm Snapdragon and/or Intel Atom processor. Processor 310 may comprise at least one application-specific integrated circuit, ASIC. Processor 310 may comprise at least one field-programmable gate array, FPGA. Processor 310 may be means for performing method steps in device 300. Processor 310 may be configured, at least in part by computer instructions, to perform actions.

Device 300 may comprise memory 320. Memory 320 may comprise random-access memory and/or permanent memory. Memory 320 may comprise at least one RAM chip. Memory 320 may comprise solid-state, magnetic, optical and/or holographic memory, for example. Memory 320 may be at least in part accessible to processor 310. Memory 320 may be at least in part comprised in processor 310. Memory 320 may be means for storing information. Memory 320 may comprise computer instructions that processor 310 is configured to execute. When computer instructions configured to cause processor 310 to perform certain actions are stored in memory 320, and device 300 overall is configured to run under the direction of processor 310 using computer instructions from memory 320, processor 310 and/or its at least one processing core may be considered to be configured to perform said certain actions. Memory 320 may be at least in part comprised in processor 310. Memory 320 may be at least in part external to device 300 but accessible to device 300.

Device 300 may comprise a transmitter 330. Device 300 may comprise a receiver 340. Transmitter 330 and receiver 340 may be configured to transmit and receive, respectively, information in accordance with at least one cellular or non-cellular standard. Transmitter 330 may comprise more than one transmitter. Receiver 340 may comprise more than one receiver. Transmitter 330 and/or receiver 340 may be configured to operate in accordance with global system for mobile communication, GSM, wideband code division multiple access, WCDMA, long term evolution, LTE, IS-95, wireless local area network, WLAN, Ethernet and/or worldwide interoperability for microwave access, WiMAX, standards, for example.

Device 300 may comprise a near-field communication, NFC, transceiver 350. NFC transceiver 350 may support at least one NFC technology, such as NFC, Bluetooth, Wibree or similar technologies.

Device 300 may comprise user interface, UI, 360. UI 360 may comprise at least one of a display, a keyboard, a touchscreen, a vibrator arranged to signal to a user by causing device 300 to vibrate, a speaker and a microphone. A user may be able to operate device 300 via UI 360, for example to request access rights to digital resources.

Device 300 may comprise or be arranged to accept a user identity module 370. User identity module 370 may comprise, for example, a subscriber identity module, SIM, card installable in device 300. A user identity module 370 may comprise information identifying a subscription of a user of device 300. A user identity module 370 may comprise cryptographic information usable to verify the identity of a user of device 300 and/or to facilitate encryption of communicated information and billing of the user of device 300 for communication effected via device 300.

Processor 310 may be furnished with a transmitter arranged to output information from processor 310, via electrical leads internal to device 300, to other devices comprised in device 300. Such a transmitter may comprise a serial bus transmitter arranged to, for example, output information via at least one electrical lead to memory 320 for storage therein. Alternatively to a serial bus, the transmitter may comprise a parallel bus transmitter. Likewise processor 310 may comprise a receiver arranged to receive information in processor 310, via electrical leads internal to device 300, from other devices comprised in device 300. Such a receiver may comprise a serial bus receiver arranged to, for example, receive information via at least one electrical lead from receiver 340 for processing in processor 310. Alternatively to a serial bus, the receiver may comprise a parallel bus receiver.

Device 300 may comprise further devices not illustrated in FIGURE 3. For example, where device 300 comprises a smartphone, it may comprise at least one digital camera. Some devices 300 may comprise a back-facing camera and a front-facing camera, wherein the back-facing camera may be intended for digital photography and the front-facing camera for video telephony. Device 300 may comprise a fingerprint sensor arranged to authenticate, at least in part, a user of device 300. In some embodiments, device 300 lacks at least one device described above. For example, some devices 300 may lack a NFC transceiver 350 and/or user identity module 370.

Processor 310, memory 320, transmitter 330, receiver 340, NFC transceiver 350, UI 360 and/or user identity module 370 may be interconnected by electrical leads internal to device 300 in a multitude of different ways. For example, each of the aforementioned devices may be separately connected to a master bus internal to device 300, to allow for the devices to exchange information. However, as the skilled person will appreciate, this is only one example and depending on the embodiment various ways of interconnecting at least two of the aforementioned devices may be selected without departing from the scope of the present invention.

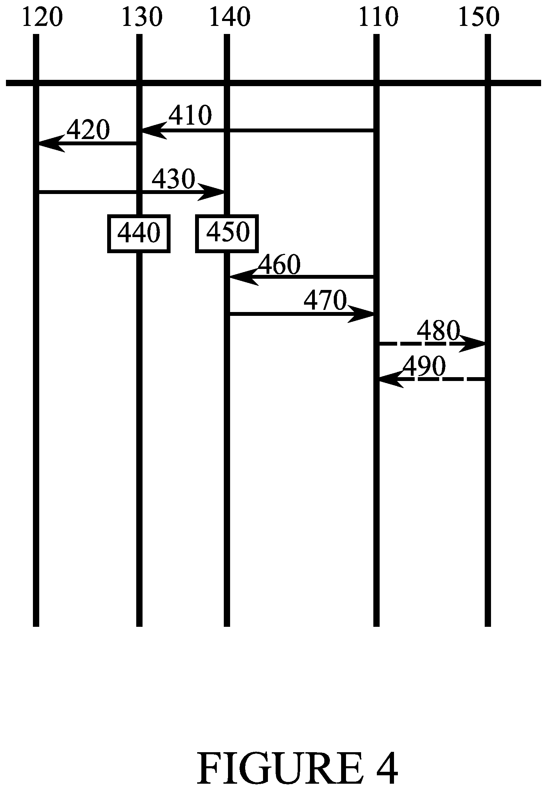

FIGURE 4 illustrates signalling in accordance with at least some embodiments of the present invention. On the vertical axes are disposed, from the left toward the right, device 120, transaction ledger 130, rights ledger 140 and user device 110 of FIGURE 1. Furthest on the right is disposed a certification ledger 150. Time advances from the top toward the bottom.

Phase 410 comprises the user device requesting access to a digital resource. A request to such effect is transmitted to transaction ledger 130. Phase 410 may correspond to request 112 in FIGURE 1. In phase 420, device 120 is informed of a transaction in transaction ledger 130 caused by the request of phase 410. Phase 420 may correspond to a response to query 122 of FIGURE 1.

In phase 430, device 120 causes a new transaction to be entered into rights ledger 140. This phase may correspond to transaction 124 of FIGURE 1, for example. Phases 440 and 450 correspond to new blocks being established in block chain ledgers transaction ledger 130 and rights ledger 140. As described above, the new blocks may be established jointly, or, alternatively, the ledgers may be separate and the new blocks may in that case be established in separate processes. In case the blocks are not established jointly, they need not be established at the same time.

In phase 460, user device 110 may query from rights ledger, whether the user is authorized to access the digital resource, and the rights ledger, or a node participating in maintaining the rights ledger, may responsively in phase 470 indicate the user indeed is authorized to access the digital resource.

In optional phases 480 and 490, user device may query from certification ledger, whether user device 110 is of a correct type to provide the digital resource to the user. For example, where the digital resource is an x-ray image of a patient, a user device needs to have a display screen to be capable of presenting the resource to the user. Optional phases 480 and 490 need not occur last, as illustrated in FIGURE 4, but they may occur at other phases of the procedure as well, for example, they may occur first since if the user device is of a wrong type, obtaining access rights via the transaction ledger and rights ledger is pointless.

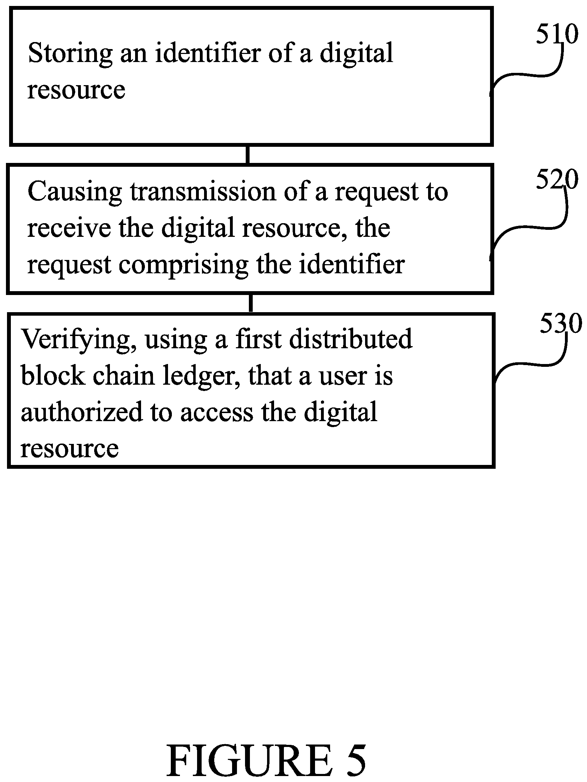

FIGURE 5 is a flow graph of a method in accordance with at least some embodiments of the present invention. The phases of the illustrated method may be performed in user device 110, an auxiliary device or a personal computer, for example, or in a control device configured to control the functioning thereof, when implanted therein.

Phase 510 comprises storing an identifier of a digital resource. Phase 520 comprises causing transmission of a request to receive the digital resource, the request comprising the identifier. Finally, phase 530 comprises verifying, using a first distributed block chain ledger, that a user is authorized to access the digital resource.

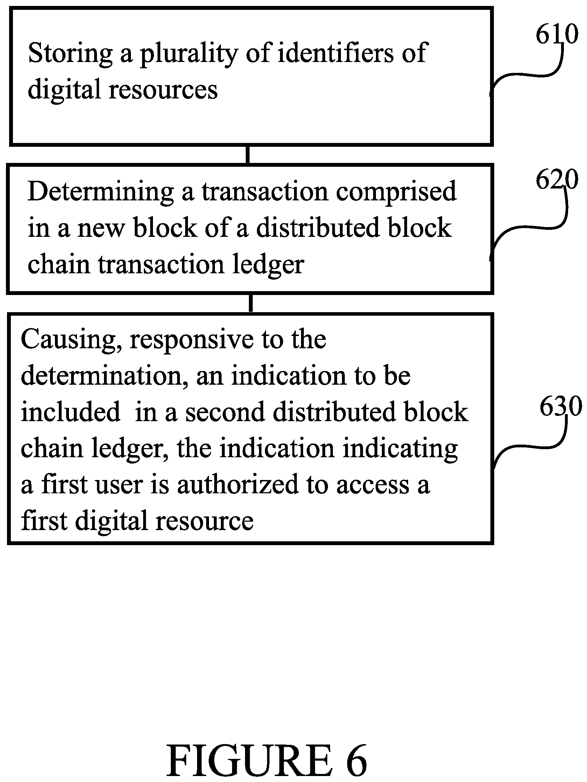

FIGURE 6 is a flow graph of a method in accordance with at least some embodiments of the present invention. The phases of the illustrated method may be performed in device 120, an auxiliary device or a personal computer, for example, or in a control device configured to control the functioning thereof, when implanted therein.

Phase 610 comprises storing a plurality of identifiers of digital resources. Phase 620 comprises determining a transaction comprised in a new block of a distributed block chain transaction ledger. Finally, phase 630 comprises causing, responsive to the determination, an indication to be included in a second distributed block chain ledger, the indication indicating a first user is authorized to access a first digital resource.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the preceding description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

### INDUSTRIAL APPLICABILITY

At least some embodiments of the present invention find industrial application in managing digital resources.

**REFERENCE SIGNS LIST**

| | |
|---|---|
| 110 | User device |
| 120 | Device |
| 130 | Transaction ledger |
| 140 | Rights ledger |
| 112 | Authentication request |
| 114 | Query to rights ledger 140 |
| 122 | Query to transaction ledger 130 |
| 124 | Transaction to rights ledger 140 |
| 210, 220 | Blocks (FIGURE 2) |
| 212, 222 | Previous hash |
| 214, 224 | Combined hash |
| 216, 226 | Block hash |
| 218, 228 | Proof-of-work |
| 300-370 | Structure of the apparatus of FIGURE 3 |
| 410 - 490 | Phases of the method of FIGURE 4 |
| 510-530 | Phases of the method of FIGURE 5 |
| 610 - 630 | Phases of the method of FIGURE 6 |

## Claims

1. An apparatus (110) comprising means (310, 320) for performing:
- storing (510), in a memory comprised in the apparatus, an identifier of a digital resource;
- causing transmission, to a distributed block chain transaction ledger, of a request for authorization concerning the digital resource;
- causing transmission (520), to a server arrangement, of a request to receive the digital resource in the apparatus, the request comprising the identifier, and
- verifying (530), using an indication included in a first distributed block chain ledger distinct from the distributed block chain transaction ledger, that a user of the apparatus is authorized to access the digital resource, the first distributed block chain ledger comprising grants of access rights, the verifying comprising querying the first distributed block chain ledger, the digital resource being a configuration data file for the apparatus, wherein the means (310, 320) are further configured to, responsive to the user being verified as being authorized to access the digital resource, provide the configuration data file to the user to enable the user to access the correct configuration data for his device.

2. The apparatus (110) according to claim 1, wherein the means (310, 320) are further configured to verify, using a distributed block chain certification ledger, that the apparatus is of a correct type to provide the digital resource to the user, the distributed block chain certification ledger being distinct from the first distributed block chain ledger and the distributed block chain transaction ledger.

3. The apparatus (110) according to any of claims 1 - 2, wherein the means (310, 320) are further configured to verify the user is authorized to access the digital resource by transmitting a request to a node.

4. An apparatus (120) comprising means (310, 320) for performing:
- storing (610) ), in a memory comprised in the apparatus, a plurality of identifiers of digital resources;
- determining (620) a request for authorization transaction from a first user comprised in a new block of a distributed block chain transaction ledger, and to responsively cause (630) an indication to be included in a second distributed block chain ledger, the indication indicating the first user is authorized to access a configuration data file for a device of the first user, the second distributed block chain ledger comprising grants of access rights.

5. The apparatus (120) according to claim 4, wherein the means (310, 320) are further configured to store a local copy of the distributed block chain transaction ledger and the second distributed block chain ledger.

6. The apparatus (120) according to any of claims 4 - 5, wherein the means (310, 320) are further configured to combine the Merkle hashes of the distributed block chain transaction ledger and the second distributed block chain ledger into a single hash when adding new blocks.

7. The apparatus (120) according to any of claims 4 - 6, wherein the means (310, 320) are further configured to render at least one of the distributed block chain transaction ledger and the second distributed block chain ledger unusable responsive to a determination the apparatus is being tampered with.

8. The apparatus (120) according to claim 7, wherein the means (310, 320) are further configured to permanently deleting at least one encryption key.

9. The apparatus (120) according to any of claims 4 - 8, wherein the means (310, 320) are further configured to associate a validity time with the indication.

10. A method comprising:
- storing (510), in a memory comprised in the apparatus defined in claim 1, an identifier of a digital resource;
- causing transmission, to a distributed block chain transaction ledger, of a request for authorization concerning the digital resource
- causing transmission (520), to a server arrangement, of a request to receive the digital resource, the request comprising the identifier, and
- verifying (530), using an indication included in a first distributed block chain ledger distinct from the distributed block chain transaction ledger, that a user is authorized to access the digital resource, the first distributed block chain ledger comprising grants of access rights, the verifying comprising querying the first distributed block chain ledger, the digital resource being a configuration data file for the apparatus, wherein the method further comprises, responsive to the user being verified as being authorized to access the digital resource, providing the configuration data file to the user to enable the user to access the correct configuration data for his device.

11. The method according to claim 10, further comprising verifying, using a distributed block chain certification ledger, that an apparatus of the user is of a correct type to provide the digital resource to the user, the distributed block chain certification ledger being distinct from the first distributed block chain ledger and the distributed block chain transaction ledger.

12. A method, comprising:
- storing (610), in a memory comprised in the apparatus defined in claim 4, a plurality of identifiers of digital resources;
- determining (620) a request for authorization transaction from a first user comprised in a new block of a distributed block chain transaction ledger, and to responsively cause (630) an indication to be included in a second distributed block chain ledger, the indication indicating the first user is authorized to access a configuration data file for a device of the first user, the second distributed block chain ledger comprising grants of access rights.

13. A computer program configured to cause a method in accordance with at least one of claims 10 - 12 to be performed, when run.

## Patentansprüche

1. Einrichtung (110), die Mittel (310, 320) zum Durchführen von Folgendem umfasst:
- Speichern (510) einer Kennung einer digitalen Ressource in einem Speicher, der in der Einrichtung umfasst ist;
- Veranlassen einer Übertragung einer Anforderung einer Autorisierung, die sich auf die digitale Ressource bezieht, zu einem verteilten Blockkettentransaktionshauptbuch;
- Veranlassen einer Übertragung (520) einer Anforderung zum Empfangen der digitalen Ressource in der Einrichtung, zu einer Serveranordnung, wobei die Anforderung die Kennung umfasst, und
- Verifizieren (530) unter Verwendung einer Anzeige, die in einem ersten verteilten Blockkettenhauptbuch beinhaltet ist, das sich vom verteilten Blockkettentransaktionshauptbuch unterscheidet, dass ein Benutzer der Einrichtung autorisiert ist, auf die digitale Ressource zuzugreifen, wobei das verteilte Blockkettenhauptbuch Gewährungen von Zugriffsrechten umfasst, wobei das Verifizieren das Abfragen des ersten verteilten Blockkettenhauptbuchs umfasst, wobei die digitale Ressource eine Auslegungsdatendatei für die Einrichtung ist, wobei die Mittel (310, 320) ferner dazu ausgelegt sind, in Reaktion darauf, dass der Benutzer als zum Zugreifen auf die digitale Ressource autorisiert verifiziert ist, die Auslegungsdatendatei für den Benutzer bereitzustellen, um es dem Benutzer zu ermöglichen, auf die korrekten Auslegungsdaten für seine Vorrichtung zuzugreifen.

2. Einrichtung (110) nach Anspruch 1**,** wobei die Mittel (310, 320) ferner dazu ausgelegt sind, unter Verwendung eines verteilten Blockkettenzertifizierungshauptbuchs zu verifizieren, dass die Einrichtung von einem korrekten Typ ist, um dem Benutzer die digitale Ressource bereitzustellen, wobei sich das verteilte Blockkettenzertifizierungshauptbuch vom ersten verteilten Blockkettenhauptbuch und vom verteilten Blockkettentransaktionshauptbuch unterscheidet.

3. Einrichtung (110) nach einem der Ansprüche 1-2, wobei die Mittel (310, 320) ferner dazu ausgelegt sind, durch Übertragen einer Anforderung zu einem Knoten zu verifizieren, dass der Benutzer autorisiert ist, auf die digitale Ressource zuzugreifen.

4. Einrichtung (120), die Mittel (310, 320) zum Durchführen von Folgendem umfasst:
- Speichern (610) einer Vielzahl von Kennungen von digitalen Ressourcen in einem Speicher, der in der Einrichtung umfasst ist;
- Bestimmen (620) einer Anforderung einer Autorisierungstransaktion von einem ersten Benutzer, der in einem neuen Block eines verteilten Blockkettentransaktionshauptbuchs umfasst ist, und in Reaktion darauf Veranlassen (630) einer Anzeige, die in einem zweiten verteilten Blockkettenhauptbuch zu beinhalten ist, wobei die Anzeige anzeigt, dass der erste Benutzer autorisiert ist, auf eine Auslegungsdatendatei für eine Vorrichtung des ersten Benutzers zuzugreifen, wobei das zweite verteilte Blockkettenhauptbuch Gewährungen von Zugriffsrechten umfasst.

5. Einrichtung (120) nach Anspruch 4, wobei die Mittel (310, 320) ferner dazu ausgelegt sind, eine lokale Kopie des verteilten Blockkettentransaktionshauptbuchs und des zweiten verteilten Blockkettenhauptbuchs zu speichern.

6. Einrichtung (120) nach einem der Ansprüche 4-5, wobei die Mittel (310, 320) ferner dazu ausgelegt sind, die Merkle-Hashes des verteilten Blockkettentransaktionshauptbuchs und des zweiten verteilten Blockkettenhauptbuchs zu einem einzelnen Hash zu kombinieren, wenn neue Blöcke hinzugefügt werden.

7. Einrichtung (120) nach einem der Ansprüche 4-6, wobei die Mittel (310, 320) ferner dazu ausgelegt sind, in Reaktion auf eine Bestimmung, dass die Einrichtung manipuliert wird, mindestens eines des verteilten Blockkettentransaktionshauptbuchs und des zweiten verteilten Blockkettenhauptbuchs unbrauchbar zu machen.

8. Einrichtung (120) nach Anspruch 7, wobei die Mittel (310, 320) ferner dazu ausgelegt sind, mindestens einen Verschlüsselungsschlüssel permanent zu löschen.

9. Einrichtung (120) nach einem der Ansprüche 4-8, wobei die Mittel (310, 320) ferner dazu ausgelegt sind, eine Gültigkeitszeit mit der Anzeige zu verknüpfen.

10. Verfahren, das Folgendes umfasst:
- Speichern (510) einer Kennung einer digitalen Ressource in einem Speicher, der in der in Anspruch 1 definierten Einrichtung umfasst ist;
- Veranlassen einer Übertragung einer Anforderung einer Autorisierung, die sich auf die digitale Ressource bezieht, zu einem verteilten Blockkettentransaktionshauptbuch
- Veranlassen einer Übertragung (520) einer Anforderung zum Empfangen der digitalen Ressource, zu einer Serveranordnung, wobei die Anforderung die Kennung umfasst, und
- Verifizieren (530) unter Verwendung einer Anzeige, die in einem ersten verteilten Blockkettenhauptbuch beinhaltet ist, das sich vom verteilten Blockkettentransaktionshauptbuch unterscheidet, dass ein Benutzer autorisiert ist, auf die digitale Ressource zuzugreifen, wobei das verteilte Blockkettenhauptbuch Gewährungen von Zugriffsrechten umfasst, wobei das Verifizieren das Abfragen des ersten verteilten Blockkettenhauptbuchs umfasst, wobei die digitale Ressource eine Auslegungsdatendatei für die Einrichtung ist, wobei das Verfahren ferner in Reaktion darauf, dass der Benutzer als zum Zugreifen auf die digitale Ressource autorisiert verifiziert ist, das Bereitstellen der Auslegungsdatendatei für den Benutzer umfasst, um es dem Benutzer zu ermöglichen, auf die korrekten Auslegungsdaten für seine Vorrichtung zuzugreifen.

11. Verfahren nach Anspruch 10, das ferner das Verifizieren unter Verwendung eines verteilten Blockkettenzertifizierungshauptbuchs, dass eine Einrichtung des Benutzers von einem korrekten Typ ist, um dem Benutzer die digitale Ressource bereitzustellen, umfasst, wobei sich das verteilte Blockkettenzertifizierungshauptbuch vom ersten verteilten Blockkettenhauptbuch und vom verteilten Blockkettentransaktionshauptbuch unterscheidet.

12. Verfahren, das Folgendes umfasst:
- Speichern (610) einer Vielzahl von Kennungen von digitalen Ressourcen in einem Speicher, der in der in Anspruch 4 definierten Einrichtung umfasst ist;
- Bestimmen (620) einer Anforderung einer Autorisierungstransaktion von einem ersten Benutzer, der in einem neuen Block eines verteilten Blockkettentransaktionshauptbuchs umfasst ist, und in Reaktion darauf Veranlassen (630) einer Anzeige, die in einem zweiten verteilten Blockkettenhauptbuch zu beinhalten ist, wobei die Anzeige anzeigt, dass der erste Benutzer autorisiert ist, auf eine Auslegungsdatendatei für eine Vorrichtung des ersten Benutzers zuzugreifen, wobei das zweite verteilte Blockkettenhauptbuch Gewährungen von Zugriffsrechten umfasst.

13. Computerprogramm, das dazu ausgelegt ist zu veranlassen, dass ein Verfahren nach mindestens einem der Ansprüche 10-12 durchgeführt wird, wenn es läuft.

## Revendications

1. Appareil (110) comprenant des moyens (310, 320) pour effectuer ce qui suit :
- stocker (510) dans une mémoire comprise dans l'appareil un identifiant d'une ressource numérique ;
- provoquer la transmission à un registre de transactions de chaîne de blocs distribué d'une demande d'autorisation concernant la ressource numérique ;
- provoquer la transmission (520) à un agencement de serveur d'une demande recevoir la ressource numérique dans l'appareil, la demande comprenant l'identifiant, et
- en utilisant une indication incluse dans un premier registre de chaîne de blocs distribué distinct du registre de transactions de chaîne de blocs distribué, vérifier (530) qu'un utilisateur de l'appareil est autorisé à accéder à la ressource numérique, le premier registre de chaîne de blocs distribué comprenant des octrois de droits d'accès, la vérification comprenant l'interrogation du premier registre de chaîne de blocs distribué, la ressource numérique étant un fichier de données de configuration pour l'appareil, dans lequel les moyens (310, 320) sont en outre configurés pour, lorsque la vérification donne que l'utilisateur est autorisé à accéder à la ressource numérique, fournir le fichier de données de configuration à l'utilisateur pour permettre à l'utilisateur d'accéder aux données de configuration appropriées pour son dispositif.

2. Appareil (110) selon la revendication 1, dans lequel les moyens (310, 320) sont en outre configurés pour, en utilisant un registre de certification de chaîne de blocs distribué, vérifier que l'appareil est d'un type approprié pour fournir la ressource numérique à l'utilisateur, le registre de certification de chaîne de blocs distribué étant distinct du premier registre de chaîne de blocs distribué et du registre de transactions de chaîne de blocs distribué.

3. Appareil (110) selon l'une des revendications 1 et 2, dans lequel les moyens (310, 320) sont en outre configurés pour vérifier que l'utilisateur est autorisé à accéder à la ressource numérique en transmettant une demande à un nœud.

4. Appareil (120) comprenant des moyens (310, 320) pour effectuer ce qui suit :
- stocker (610) dans une mémoire comprise dans l'appareil une pluralité d'identifiants de ressources numériques ;
- déterminer (620) une demande d'autorisation de transaction provenant d'un premier utilisateur compris dans un nouveau bloc d'un registre de transactions de chaîne de blocs distribué et en réponse, provoquer (630) l'inclusion d'une indication dans un deuxième registre de chaîne de blocs distribué, l'indication indiquant que le premier utilisateur est autorisé à accéder à un fichier de données de configuration pour un dispositif du premier utilisateur, le deuxième registre de chaîne de blocs distribué comprenant des octrois de droits d'accès.

5. Appareil (120) selon la revendication 4, dans lequel les moyens (310, 320) sont en outre configurés pour stocker une copie locale du registre de transactions de chaîne de blocs distribué et du deuxième registre de chaîne de blocs distribué.

6. Appareil (120) selon l'une des revendications 4 et 5, dans lequel les moyens (310, 320) sont en outre configurés pour combiner les hachages de Merkle du registre de transactions de chaîne de blocs distribué et du deuxième registre de chaîne de blocs distribué en un seul hachage lors de l'ajout de nouveaux blocs.

7. Appareil (120) selon l'une des revendications 4 à 6, dans lequel les moyens (310, 320) sont en outre configurés pour rendre inutilisable au moins un parmi le registre de transactions de chaîne de blocs distribué et le deuxième registre de chaîne de blocs distribué lorsqu'il est déterminé que celui-ci altère l'appareil.

8. Appareil (120) selon la revendication 7, dans lequel les moyens (310, 320) sont en outre configurés pour supprimer définitivement au moins une clé de chiffrement.

9. Appareil (120) selon l'une des revendications 4 à 8, dans lequel les moyens (310, 320) sont en outre configurés pour associer un temps de validité à l'indication.

10. Procédé comprenant les étapes suivantes :
- stocker (510) dans une mémoire comprise dans l'appareil défini dans la revendication 1, un identifiant d'une ressource numérique ;
- provoquer la transmission à un registre de transactions de chaîne de blocs distribué d'une demande d'autorisation concernant la ressource numérique
- provoquer la transmission (520) à un agencement de serveur d'une demande de recevoir la ressource numérique, la demande comprenant l'identifiant, et
- en utilisant une indication incluse dans un premier registre de chaîne de blocs distribué distinct du registre de transactions de chaîne de blocs distribué, vérifier (530) qu'un utilisateur est autorisé à accéder à la ressource numérique, le premier registre de chaîne de blocs distribué comprenant des octrois de droits d'accès, la vérification comprenant l'interrogation du premier registre de chaîne de blocs distribué, la ressource numérique étant un fichier de données de configuration pour l'appareil, dans lequel le procédé comprend en outre, lorsque la vérification donne que l'utilisateur est autorisé à accéder à la ressource numérique, la fourniture du fichier de données de configuration à l'utilisateur pour permettre à l'utilisateur d'accéder aux bonnes données de configuration pour son dispositif.

11. Procédé selon la revendication 10, comprenant en outre, en utilisant un registre de certification de chaîne de blocs distribué, la vérification du fait qu'un appareil de l'utilisateur est d'un type approprié pour fournir la ressource numérique à l'utilisateur, le registre de certification de chaîne de blocs distribué étant distinct du premier registre de chaîne de blocs distribué et du registre de transactions de chaîne de blocs distribué.

12. Procédé, comprenant les étapes suivantes :
- stocker (610) dans une mémoire comprise dans l'appareil défini dans la revendication 4, une pluralité d'identifiants de ressources numériques ;
- déterminer (620) une demande d'autorisation de transaction provenant d'un premier utilisateur comprise dans un nouveau bloc d'un registre de transactions de chaîne de blocs distribué et en réponse, provoquer (630) l'inclusion d'une indication dans un deuxième registre de chaîne de blocs distribué, l'indication indiquant que le premier utilisateur est autorisé à accéder à un fichier de données de configuration pour un dispositif du premier utilisateur, le deuxième registre de chaîne de blocs distribué comprenant des octrois de droits d'accès.

13. Programme informatique configuré pour provoquer la réalisation d'un procédé conformément à au moins une des revendications 10 à 12, lorsqu'il est exécuté.
